# EUROPEAN PATENT APPLICATION

(11) **EP 4 764 404 A1**
(43) Date of publication of application: **24.06.2026**
(21) Application number: 24222323.8
(22) Date of filing: 20.12.2024
(51) Int. Cl.: G01C 15/00, G01C 1/04

(54) **A METHOD OF OPERATING A SURVEYING INSTRUMENT FOR WOBBLE CORRECTION AND SURVEYING INSTRUMENT THEREOF**

(71) Applicant: Trimble Inc, Westminster CO 80021 (US)
(72) Inventor: LEMAIRE, Charles, Westminster, 80021 (US); LABORDE, Grégory, Westminster, 80021 (US); OLSSON, Oscar, Westminster, 80021 (US)
(74) Representative: AWA Sweden AB

(57) **Abstract**

The present disclosure relates to a surveying instrument and to a method of operating a surveying instrument for tracking of a target including a plurality of light emitting elements and/or a plurality of light reflecting elements configured to emit and/or reflect light radially. The surveying instrument includes a tracking unit configured to adjust a sighting axis of said surveying instrument towards said target by maintaining a predetermined distribution of signal levels on a light sensitive detector. The method comprises obtaining an error function representative of a misalignment of said sighting axis with respect to a reference point in the target as a function of an orientation of the target relative to said surveying instrument, receiving information indicative of an orientation of said target relative to said surveying instrument while tracking said target, retrieving an error from said error function based on the received information, and compensating for the retrieved error.

## Description

### TECHNICAL FIELD

The present disclosure relates to the field of surveying equipment and more specifically to a surveying instrument and a method of operating a surveying instrument for surveying applications.

### BACKGROUND

Generally, surveying of e.g., land, buildings and constructions sites, involves the determination of terrestrial (e.g., two-dimensional, 2D, or three-dimensional, 3D) positions of points and/or the determination of distances and angles between these points. For such applications, a surveying instrument, such as a robotic total station integrating a tracking unit and/or an electronic distance measurement unit (EDM unit) with a movable centre unit (or telescope) for rotation about at least two axes (typically a trunnion, or horizontal, axis and an azimuth, or vertical, axis), may be used.

For determining a direction from the surveying instrument to a target, the surveying instrument may comprise rotational encoders measuring the rotational positions of the centre unit about the two axes. It is then possible to determine the orientation of a sighting axis of the surveying instrument in a coordinate system defined relative to a base of the surveying instrument.

For tracking of the target, the surveying instrument may be equipped with a light sensitive detector arranged to receive light from the target. The surveying instrument determines the direction to the target by recording the rotational positions of the centre unit about the two axes (thereby defining the direction to the target relative to a coordinate system of the surveying instrument) while maintaining a predetermined distribution of signal levels on the light sensitive detector.

The light received from the target on the light sensitive detector of the surveying instrument may be directly emitted from the target by one or more light sources of the target. Alternatively, the light received on the light sensitive detector may be initially emitted from the surveying instrument and reflected at a reflector or prism arranged at the target to travel back to the surveying instrument.

In some implementations, the target may include a plurality of light emitting elements and/or reflecting elements distributed around the target in order for the surveying instrument to keep track of the target independently of the orientation of the target. However, it has been observed that the accuracy in the determination of the direction from the surveying instrument to the target may still be improved.

Hence, it is desirable to provide a new and/or improved method of operating a surveying instrument for tracking of a target and a surveying instrument improving such tracking.

### SUMMARY

The present disclosure seeks to provide at least some embodiments that overcome at least some of the above-mentioned drawbacks. More specifically, the present disclosure aims at providing at least some embodiments offering at least a more accurate method of operating a surveying instrument for tracking of a target. To achieve this, a surveying instrument and a method having the features as defined in the independent claims are provided. Further advantageous embodiments of the present disclosure are defined in the dependent claims.

Embodiments according to a first aspect of the present disclosure provide a method of operating a surveying instrument for tracking of a target. The target includes a plurality of light emitting elements and/or a plurality of light reflecting elements distributed around a longitudinal axis of a base element of the target and configured to emit and/or reflect light radially. Further, the surveying instrument includes a tracking unit comprising a light sensitive detector configured to detect light emitted and/or reflected by said plurality of light emitting elements and/or plurality of light reflecting elements and the tracking unit is configured to adjust a sighting axis of the surveying instrument towards the target by maintaining a predetermined distribution of signal levels on the light sensitive detector.

The method comprises obtaining an error function representative of a misalignment of the sighting axis with respect to a reference point in the target as a function of an orientation of the target relative to said surveying instrument. The method further comprises receiving information indicative of an orientation of the target relative to the surveying instrument while tracking the target, retrieving an error from the error function based on the received information indicative of the orientation of the target relative to the surveying instrument, and compensating for the retrieved error.

Embodiments according to a second aspect of the present disclosure provide a surveying instrument configured to track a target. The target includes a plurality of light emitting elements and/or a plurality of light reflecting elements distributed around a longitudinal axis of a base element of the target and configured to emit and/or reflect light radially. The surveying instrument includes a tracking unit including a light sensitive detector configured to detect light emitted and/or reflected by said plurality of light emitting elements and/or plurality of light reflecting elements. The tracking unit is configured to adjust a sighting axis of the surveying instrument towards the target by maintaining a predetermined distribution of signal levels on the light sensitive detector. The surveying instrument further includes a processing unit configured to obtain an error function representative of a misalignment of the sighting axis with respect to a reference point in the target as a function of an orientation of the target relative to the surveying instrument, receive information indicative of an orientation of the target relative to the surveying instrument while tracking the target, retrieve an error from the error function based on the received information indicative of the orientation of the target and compensate for the retrieved error.

The plurality of light emitting elements may be a plurality of individual light emitting elements. The plurality of light reflecting elements may be a plurality of individual light reflecting elements. In other words, the target may include a plurality of discrete light emitting elements and/or a plurality of discrete light reflecting elements.

The present concept of operating a surveying instrument for tracking of a target is based on the understanding that a target including a plurality of light emitting elements arranged around a longitudinal axis of the target (or circumferentially arranged at the target) may create a wobble effect when tracked by a light sensitive device which is configured to maintain a predetermined distribution of signal levels on the light sensitive detector. As mentioned above, a surveying instrument may be equipped with a tracker or tracking unit and the surveying instrument has the capability to follow a target by detecting light emitting from, or reflected at, the target. This may be achieved by ensuring that the line of sight of the surveying instrument points toward the target by maintaining a contribution of light on the left side (left half) of the light sensitive detector of the tracker unit equal to a contribution of light on the right side (right half) of the light sensitive detector. Ideally, for any angular rotation of the target about its vertical (or plumb) axis at a given ground position, i.e., if the target is not moved horizontally, then the line of sight of the instrument towards the target should not change. However, in the case of an arrangement of individual light emitting elements or light reflecting elements around a longitudinal axis of the target, this may not be the case. With a tracker configured to follow the target (or lock on the target) by keeping a predetermined distribution of signal levels on the light sensitive detector unchanged, the surveying instrument will change its line of sight if the target is rotated, thereby creating an error which may be referred to as a wobble effect. In effect, at some rotational angles of the target, i.e., at some relative azimuths of the target relative the surveying instrument, there will be misalignment of the sighting axis of the surveying instrument with respect to the target.

The present embodiments provide for a compensation of this error in the determination of the direction from the surveying instrument to the target, thereby improving the accuracy of the tracking performed by the surveying instrument. The compensation of the error may be made by means of an error function representative of the misalignment of the sighting axis with respect to a reference point in the target as a function of an orientation of the target relative to the surveying instrument. The reference point may, for example, be a point located on the longitudinal axis of the target.

The surveying instrument may include a scanning head or centre unit mounted on an alidade for rotation about a first axis, wherein the alidade is mounted on a base of the surveying instrument for rotation about a second axis orthogonal to the first axis such that a sighting axis of the scanning head, or centre unit, is rotatable about a rotation point.

It will be appreciated that the orientation of the target relative to the surveying instrument may be referred to as a rotational angle of the target relative to the surveying instrument and may for example be obtained by at least a rotational angle of the target relative to the longitudinal axis of the base element of the target and a known direction of the sighting axis from the surveying instrument to the target.

The retrieved error may comprise a positional error of a tracked point in the target with respect to the reference point.

The retrieved error may comprise an angular error of the surveying instrument, which angular error comprises a horizontal angular error and/or a vertical angular error.

The angular error of the surveying instrument may represent a difference between the computed horizontal angle and/or vertical angle of the surveying instrument after adjustment of the sighting axis by the tracking unit and a correct horizontal angle and/or vertical angle, i.e., the horizontal angle and/or vertical angle of the surveying instrument that would result in the sighting axis pointing to the reference point.

Compensating for the retrieved error may comprise determining a position of the reference point based on the retrieved error.

Optionally, compensating for the retrieved error may further comprise changing an angle of the sighting axis.

The compensation for the retrieved error may be made in the computation of the horizontal angle and/or vertical angle of the surveying instrument. In this case, the sighting axis of the surveying instrument is still incorrect but the data providing the direction to the target is compensated by the retrieved horizontal angular error.

In some embodiments, the error function for the target may be obtained based on a reference error function obtained for a reference target by a procedure including: activating the tracking unit of the surveying instrument for tracking the reference target being placed at a fixed position relative to the surveying instrument, causing the orientation of the reference target to change relative to a direction between the surveying instrument and the target while maintaining the reference target at the fixed position, and monitoring a change in orientation of the sighting axis of the surveying instrument while monitoring the change of orientation of the reference target, the change in the orientation of the sighting axis corresponding to the error.

In some embodiments, the error function for the target may depend on a number of the plurality of light emitting elements and/or light reflecting elements distributed around the longitudinal axis of the base element and/or a geometrical arrangement of the plurality of light emitting elements and/or light reflecting elements at the base element. The geometrical arrangement of the plurality of light emitting and/or light reflecting elements may for example include the circumference of the arrangement and the spacing between the plurality of light emitting and/or light reflecting elements.

In some embodiments, the method may further include monitoring a tilt angle of the target while tracking of the target. The error function, or the compensation for the retrieved error, may depend on the tilt angle of the target. It will be appreciated that the dependence on the tilt angle of the target may be included in the error function, thereby resulting in a more complex function, or that a tilt factor may be used as part of the compensation.

In some embodiments, the method may further include monitoring a distance from the surveying instrument to the target while tracking of the target. The error function, or the compensation for the retrieved error, may depend on the distance.

In some embodiments, the tracking unit of the surveying instrument may be configured to track the target in an active mode using light emitted from the plurality of light emitting elements or in a passive mode using light emitted from the surveying instrument and reflected against the plurality of light reflecting elements of the target. The error function depends on whether the tracking unit is configured to operate in the active mode or the passive mode.

In some embodiments, the obtention of the error function for the target may further include measurements of signal intensities for each one of the plurality of light emitting elements. The error function may be adjusted depending on the measurements.

In some embodiments, the respective light emitting elements may be configured to be switched on or off depending on the orientation of the target relative to the surveying instrument. For example, the light emitting elements may be switched on or off such that for all orientations of the target relative to the surveying instrument, light emitted by only one of the light emitting elements among the plurality of light emitting elements is detected by the light sensitive detector. The error function may depend on whether all or only a subset (e.g., only one) of light emitting elements are configured to be switched on (for a given orientation of the target relative to the surveying instrument).

The method may include the surveying instrument sending and/or receiving, to and/or from the target, information indicative of a number of light emitting elements which are configured to be switched on. The error function may further depend on the information indicative of a number of light emitting elements which are configured to be switched on.

In other words, the tracking unit of the surveying instrument may be configured to track the target in a single light emitting element mode, wherein for all orientations of the target relative to the surveying instrument light emitted from only one of the light emitting elements among the plurality of light emitting elements is detected by the light sensitive detector. The error function may depend on whether the tracking unit is configured to operate in the single light emitting element mode.

In some embodiments, the tracking unit may be configured to maintain a predetermined distribution of signal levels on the light sensitive detector by maintaining the sum of the signal levels on either side of a middle line of the light sensitive detector equal. The line could be along a horizontal direction/axis or along a vertical direction/axis.

In some implementations, for example using a cameral as a light sensitive detector, the processing unit of the surveying instrument may be configured to maintain a centre of gravity of the light distribution at the same position on the image sensor of the camera.

In some embodiments, the light sensitive detector of the surveying instrument may be a camera, a quadrant photodetector or a photodiode. As mentioned above, the general principle for tracking of the target is to keep a predetermined distribution of signal levels on the light sensitive detector while recording the rotational angle of a centre unit or scanning head of the surveying instrument about the first and second axes. Using a quadrant photodetector, the direction may be determined by maintaining signal levels in each of the quadrant equal. As an alternative, a photodiode aligned with a maximum signal of the light received at the surveying instrument may be used.

In some embodiments, the information indicative of an orientation of the target may be received from an orientation sensor of the target, the orientation sensor comprising at least one of a compass or an inertial measurement unit.

In some embodiments, the orientation of the target relative to the surveying instrument may be determined at the surveying instrument based on an orientation of the surveying instrument in a common reference frame and the received information indicative of an orientation of the target, wherein the received information includes an orientation of the target in the common reference frame.

In some embodiments, the information indicative of an orientation of the target relative to the surveying instrument received from the target may include the orientation of the target relative to the surveying instrument as determined by a processing unit. It will be appreciated that the processing unit for determining the orientation of the target relative to the surveying instrument may be located in the target, in the surveying instrument or at a separate (or remote) entity such as data collector.

In general, the surveying instrument according to the second aspect includes a processing unit configured to operate in accordance with a method as defined in any of the preceding embodiments.

The present disclosure relates to all possible combinations of features recited in the claims and in the preceding embodiments. Further objects and advantages of the various embodiments of the present disclosure will be described below by means of exemplifying embodiments.

### BRIEF DESCRIPTION OF THE DRAWINGS

One or more embodiments will be described, by way of example only, and with reference to the following figures (which should not be considered as being to scale), in which:
Figure 1 schematically illustrates an example of a surveying instrument and cooperative target;
Figure 2 schematically illustrates an example of target;
Figure 3 illustrate an error function representative of a horizontal angular error of the sighting axis towards a target as function of the rotational angle of the target relative to the surveying instrument;
Figure 4a is a schematic top view of a target and placement of light sources on the target;
Figures 4b and 4c are schematic illustrations of blobs of light as seen from the surveying instrument;
Figure 4d is a schematic side view of a target;
Figures 5a and 5b illustrate the determination of a relative orientation between the target and the surveying instrument; and
Figure 6 schematically illustrates the reference point and tracked point of the target.

Whilst the invention is susceptible to various modifications and alternative forms, specific embodiments are shown by way of example in the drawings as herein described in detail. It should be understood, however, that the detailed description herein and the drawings attached hereto are not intended to limit the invention to the particular form disclosed. Rather, the intention is to cover all modifications, equivalents, and alternatives falling within the scope of the appended claims.

As used in this specification, the words "comprise", "comprising", and similar words are not to be interpreted in the exclusive or exhaustive sense. In other words, they are intended to mean "including, but not limited to".

### DETAILED DESCRIPTION

The present invention is described in the following by way of a number of illustrative examples. It will be appreciated that these examples are provided for illustration and explanation only and are not intended to be limiting on the scope of the present invention. Instead, the scope of the present invention is to be defined by the appended claims. Furthermore, although the examples may be presented in the form of individual embodiments, it will be recognised that the invention also covers combinations of the embodiments described herein.

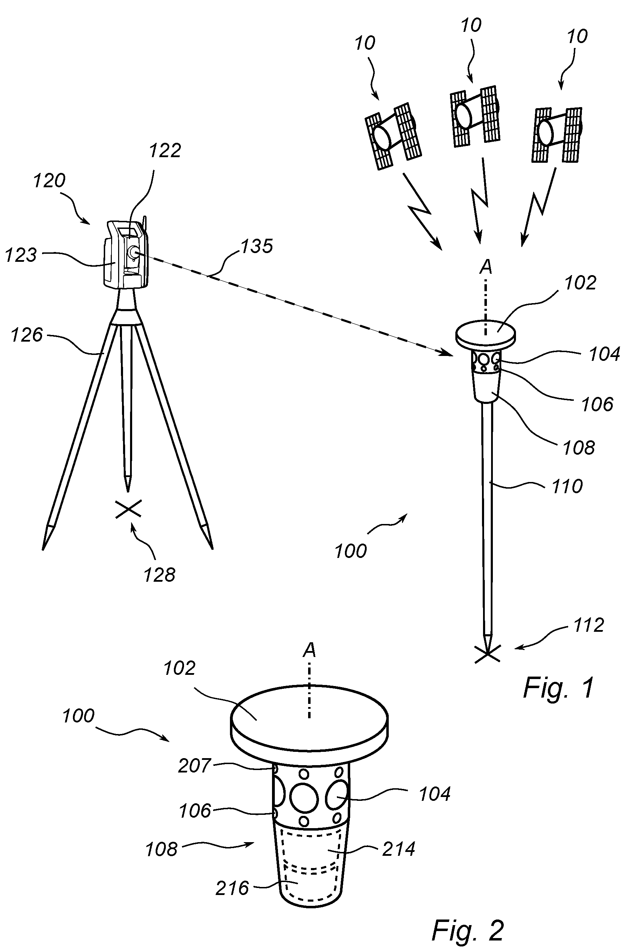

Figure 1 is a schematic illustration of a surveying application including a surveying instrument and a target.

More specifically, Figure 1 schematically illustrates a scenario involving a cooperative target 100 with a robotic total station 120 mounted on a tripod 126. The robotic total station 120 can also be used with non-cooperative targets to measure their positions. The robotic total station 120 has main element 122 comprising a telescope with a coaxial electronic-distance measurement (EDM) system for measuring a distance to the target 110 and a tracker unit for following a target and measuring the direction from the surveying instrument to the target during tracking operations. The robotic total station may be remotely controlled via a communication channel. Figure 2 illustrates the target 100 in further detail.

The target 100 includes a base element 108 having a longitudinal axis A. During operation, the target 100 may be arranged such that the longitudinal axis A is upright, or substantially vertical, or tilted by, e.g., 10 or 45 deg. For this purpose, the target may be equipped with a tilt sensor (not shown) in order to position (or for the surveyor/operator to hold) the target with the axis A along a vertical direction (i.e. the local gravity direction) or in order to determine a tilt angle between the axis A and the vertical direction.

As is shown more clearly in Figure 2, the target 100 comprises a plurality of light sources 106 arranged around the longitudinal axis A of the base element 108. In the context of this disclosure, a light source may also be referred to as a light emitting element. Further, the target 100 comprises a plurality of reflective elements 104, also arranged around the longitudinal axis A of the base element 108. The plurality of reflective elements 104 are provided to reflect incident light. In Figures 1 and 2 the light sources 106 are shown as arranged below the reflective elements 104 and interleaved with the reflective elements 104. However, it will be appreciated that other arrangements of the light sources 106 and the reflective elements 104 are possible. For example, the light sources 106 may be arranged in more than one row (or ring) around the longitudinal axis A, the light sources 106 may be arranged above the reflective elements 104, at least some of the light sources 106 may be aligned with at least some of the reflective elements 104, etc. The target 100 of Fig. 2 also shows an optional second row of light sources 207 arranged above the reflective elements.

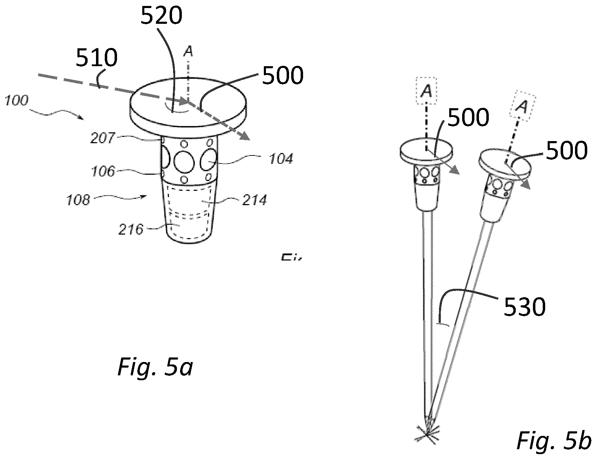

The target 100 may further comprise an inertial measurement unit (IMU) 214 comprising, for example accelerometers, for determining an orientation of the target 100. Data from the IMU 214 of the target 100 in combination with azimuth and elevation data of the surveying instrument 120, enable the determination of the orientation of the target 100 relative to the surveying instrument in e.g., a local frame of reference. As illustrated in Fig. 5a, this may include a relative azimuth 520, which is the angle between a reference azimuth 500 of the target 100 and the azimuth 510 of the surveying instrument 120. A tilt angle 530 of the target, as provided for example by the IMU 214 of the target, may also be taken into account. As illustrated in Fig. 5b, a tilt of the target 100 may affect the orientation of the reference azimuth 500.

In Figure 1, the target 100 is arranged on a pole 110 having a pointing tip, which may be placed on a measurement point 112 of interest. It will be appreciated that, in other embodiments, the target 100 may not be arranged on a pole 110. Instead, the target 100 may, for example, be arranged on a vehicle, such as a rover.

The target 100 may further comprise an (optional) global navigation satellite system (GNSS) receiver 102. The GNSS receiver/antenna 102 may receive position data from a GNSS by a plurality of satellites 10.

In Figure 1, the surveying instrument 120 is arranged on a tripod 126, such that the surveying instrument is positioned above a point of reference 128. The point of reference 128 may have a known position in a common reference frame, such as a local coordinate system or a global coordinate system. The surveying instrument 120 includes a main element 122, including a light sensitive detector (not shown in Figure 1). The main element 122 further comprises an instrument control unit (not depicted). The main element 122 may for example be the centre unit or scanning head of the surveying instrument.

The centre unit 122 may be rotatably mounted on an alidade 123 for rotation about a first axis, the alidade 123 being itself rotatably mounted on a base of the total station for rotation about a second axis orthogonal to the first axis) or the scanning head of a geodetic scanner. Expressed differently, the surveying instrument may comprise a centre unit 122 mounted on an alidade 123 for rotation about a first axis, wherein the alidade 123 is mounted on a base of the surveying instrument for rotation about a second axis orthogonal to the first axis and intersecting the first axis such that a sighting axis of the total station is rotatable about a rotation point (the first and second axes intersect within the centre unit 122).

The base may be mounted on (or include) a tripod 126, and the alidade is rotatable relative to the base about the second axis. In most surveying scenarios, it is desired that the second axis is orientated vertically and the tripod 126 and optionally a tribrach (not shown in the figures) are used to adjust the orientation of the base such that the second axis is parallel to the vertical direction defined by the gravity vector at the location of the surveying instrument.

In a common surveying operation, the surveying instrument 120 may be configured to determine a position of the point of interest 112 in relation to the point of reference 128. The EDM of the surveying instrument 120 may be configured to measure a distance between the target 100 and the surveying instrument 120. For example, the EDM may be configured to measure the distance based on a light beam emitted towards the target 100 and reflected back, at one of the reflective elements 104, towards the surveying instrument. Fig. 1 further shows the sighting axis 135 of the surveying instrument. The light beam emitted for distance measurement by the EDM is coaxial with the sighting axis 135.

In another surveying operation, the surveying instrument may be configured to track the target while moving at different geospatial positions. The surveying instrument 120 may be aimed at the target 100, i.e., the sighting axis 135 of the surveying instrument is directed from the surveying instrument 120 to the target 100, by maintaining a predetermined distribution of signal levels on the light sensitive detector of the surveying instrument.

The plurality of light sources 106 are arranged to emit light radially, i.e., in directions away from the longitudinal axis A. The light sensitive detector of the surveying instrument 120 may be configured to detect light emitted by the plurality of light sources 106. However, as the light sources 106 emit light radially, only light from some of the light sources 106 may be detected at the light sensitive detector. The light sources of the target that emit light towards the surveying instrument depend on the orientation of the target relative to the surveying instrument. If the target is rotated, while still not moved horizontally, the light sensitive detector may detect a change in the received signal levels and cause the surveying instrument to rotate in order to keep the predetermined distribution of signal levels unchanged. This will create an error in the determination of the horizontal component of the direction from the surveying instrument to the target.

In more detail, the horizontal angle of the sighting axis corresponds to the horizontal angle of the surveying instrument 120, more specifically to the horizontal angle of the alidade 123 in the instrument reference frame, as determined by e.g., one or more angular sensor and/or rotational encoders. In the scenario described above, there is a misalignment between the sighting axis 135 of the surveying instrument 120 and the true direction between the surveying instrument 120 and the target 100. Thus, the horizontal angle HA of the surveying instrument will not reflect the true horizontal component of the direction between the surveying instrument 120 and the target 100. This error may be referred to as the horizontal angle error or HA error.

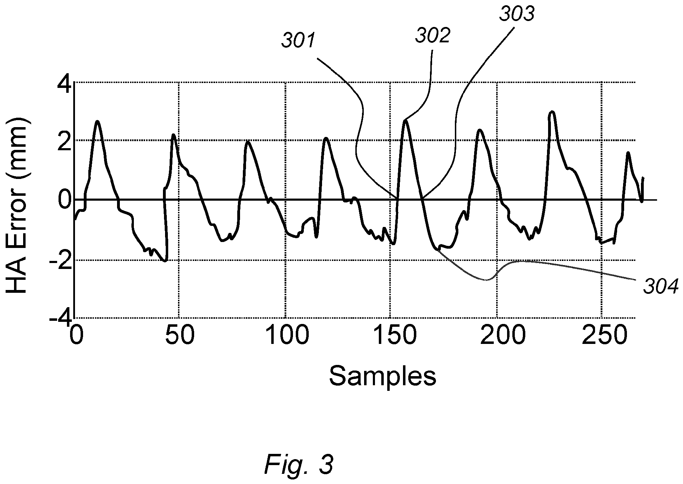

The HA error will also depend on the distribution of the plurality of light sources 106 around the axis A. The HA error as a function of orientation of the target relative to the surveying instrument may further fluctuate between peaks representing maximum errors on either side of the longitudinal axis A of the target. This is illustrated in Fig. 3, which shows an HA error as a function of the rotation of the target. At the rotation angles of points 301 and 303, the error is substantially zero. At the rotation angles of points 302 and 304, there are respective peaks in the error, with the sign of the error indicating on which side of the longitudinal axis A of the target the error occurs. In this example, the target comprises eight light sources 106 evenly distributed around the circumference of the target. With a full rotation (360°) of the target, the pattern with two points of zero error and two peaks of opposite signs is thus repeated eight times.

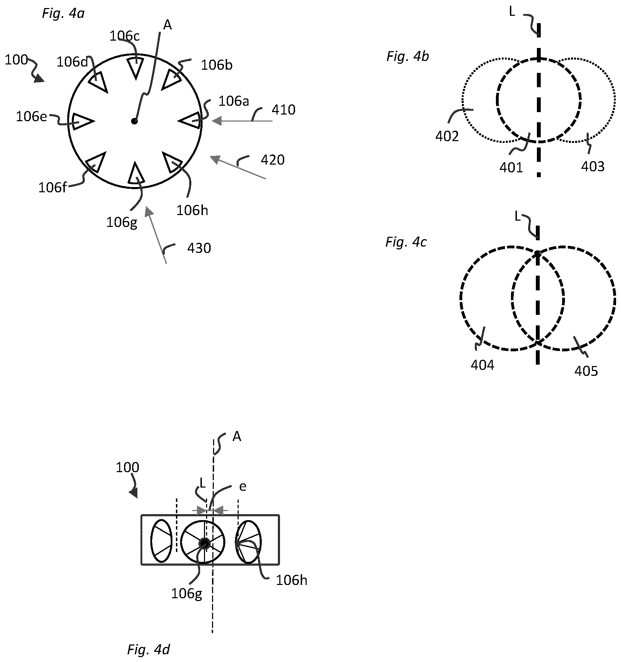

This configuration is schematically illustrated in Figs. 4a-c. Fig. 4a illustrates a top view of the target 100, with eight light sources 106a-h evenly distributed around the circumference of the target. Figs. 4b and 4c illustrate the view of the target 100 from the point of view of (the tracking unit of) the surveying instrument 120.

In the case of Fig. 4b, the sighting axis of a surveying instrument 120 is pointing directly at one light source 106a of the target 100 as illustrated by arrow 410 in Fig. 4a. The circle 401 represents a blob of (defocussed) light received from light source 106a, whereas circles 402 and 403 represent blobs of light received from light sources 106h and 106b, respectively. In this example, the direction of the sighting axis is determined by keeping an equal contribution of light received from the light sources 106a, 106b, 106h on either side of an axis L. From the point of view of the surveying instrument 120 and with this relative orientation of the target and the surveying instrument, this axis L overlaps with the longitudinal axis A of the target. The HA error is thus zero, corresponding to point 301 in Fig. 3.

In the case of Fig. 4c, the sighting axis of a surveying instrument 120 is pointing exactly between two light sources 106a and 106h of the target 100 as illustrated by arrow 420 in Fig. 4a. The circle 404 represents a blob of (defocussed) light received from light source 106h and circle 405 represents a blob of (defocussed) light received from light source 106a. In this example, the direction of the sighting axis is determined by keeping an equal contribution of light received from the light sources 106a, 106h of the target on either side of the axis L. As in the case of Fig. 4b, from the point of view of the surveying instrument and with this relative orientation of the target and the surveying instrument, the axis L overlaps with the longitudinal axis A of the target. The horizontal error is thus zero, corresponding to point 303 in Fig. 3.

At intermediate rotation angles of the target 100, such as with a sighting axis of a surveying instrument as illustrated by arrow 430 in Fig. 4a, the contribution of a "middle" light source may be dominating, and the contribution of "side" light sources may not be strong enough. This scenario is illustrated in Fig. 4d, which schematically illustrates the target 100 of Fig. 4a as seen from a surveying instrument with sighting axis oriented along arrow 430. Light sources 106g and 106h are both visible. However, the contribution of light source 106g is dominating: when keeping an equal contribution of light received from the light sources of the target 100 on either side of the axis L, in this case the axis L does not overlap with the longitudinal axis A of the target. There is thus an HA error e representative of a misalignment between the sighting axis of the surveying instrument 120 and the longitudinal axis A of the target.

The examples above show how a horizontal misalignment of the sighting axis may occur. It will be appreciated that a misalignment of the sighting axis may also have a vertical component. A vertical angle error or VA error may for example be caused by the geometrical configuration of the plurality of light emitting elements around the longitudinal axis of the base element of the target. The position of the plurality of light emitting elements may for example slightly vary along the longitudinal axis, thereby causing a vertical wobble effect. In other implementations, the plurality of light emitting elements and/or the plurality of light reflecting elements may be distributed around the longitudinal axis of the base element of the target along at least two rings. A vertical angular error may for example be observed if the light emitting elements of the two rings emit at different intensities.

In other examples, the target may be tilted, i.e., the longitudinal axis A of the target may be oriented at an angle with respect to the gravity direction as illustrated in Fig. 5. In this case, a rotation of the target 100 about its longitudinal axis A will result in the light sources 106 of the target moving both horizontally and vertically, with respect to the surveying instrument. The light sensitive detector may thus detect a change in the received signal levels and cause the instrument to rotate about botht the first axis and the second axis in order to keep the predetermined distribution of signal levels unchanged.

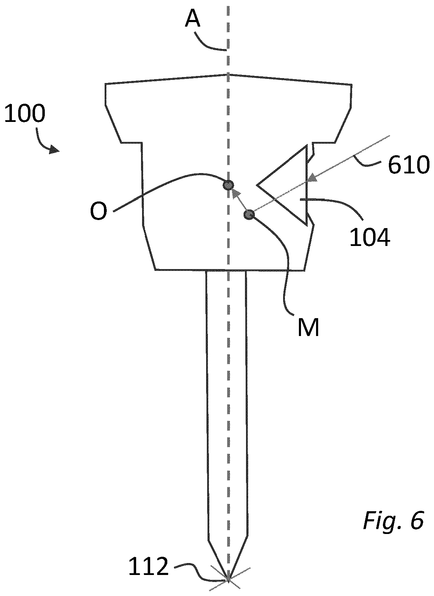

Thus, more generally, the tracking unit being configured to adjust the sighting axis of the surveying instrument towards the target by maintaining a predetermined distribution of signal levels on the light sensitive detector may result in a misalignment of the sighting axis with respect to a reference point in the target. The reference point O is a point of known position in the local frame of reference of the target and may, for example, be a point located on the longitudinal axis A, as illustrated in Fig. 6.

The present disclosure provides a surveying system and a method, which compensates for such a misalignment and thereby may improve the accuracy of a surveying operation.

As noted above in connection with Fig. 3, the error may have a repeating pattern, with the pattern repeating as a function of the orientation of the target relative to the surveying instrument corresponding to the distribution of the light emitting elements/and or light reflecting elements around the longitudinal axis of the base element of the target. Thus, the error function may for example be defined for a limited range of relative azimuth, e.g., for a range of 45° in the case of eight light emitting elements as in the example of Fig. 3, and superimposed/repeated to obtain an error function for the full 360° of relative azimuth.

It should further be noted that all light emitting elements in the plurality of light emitting elements need not be illuminated at the same time. In some embodiments, the light emitting elements may be switched on or off depending on the relative azimuth, such that the tracking may be performed with a single light emitting element. For example, within a predetermined range of relative azimuth, a first light emitting element is illuminated. When the target is rotated outside of this range, the first light emitting element is switched off and a second light emitting element, adjacent to the first, is switched on. Thus, from the point of view of the surveying instrument, only one light emitting element is detected, irrespective of the relative azimuth. This may improve the accuracy of the tracking and/or of the compensation.

As described above, the surveying instrument 120 may be configured to determine a position of the point of interest 112 in relation to the point of reference 128. For this purpose, the EDM of the surveying instrument 120 may be configured to measure the distance between the surveying instrument 120 and the target 100 based on a light beam emitted towards the target 100 and reflected back, at one of the reflective elements 104, towards the surveying element 120. The angle of incidence of the light beam emitted towards the target on the reflective element 104 will depend on the orientation of the sighting axis as adjusted by the tracking unit. Typically, the instrument (or the tracking unit) may be configured such that light path of the emitted light beam coincides with the sighting axis.

Fig. 6 schematically illustrates a target 100 and one reflective element 104 of the target. A resulting (weighted) average light path of the light emitted by the light emitting elements 106 and/or light reflecting elements 104 seen by the light sensitive detector of the surveying instrument is illustrated at 610. With a coaxial EDM as described above, the light emitted from the EDM also has an average light path along light path 610.

The reflective element 104 may be a prism. Due to the physical properties of the prism 104, light from a reflective surface of the prism 140 may be refracted. Hence, an apparent image of the signals from the target, representative for example of a reflective surface of the prism 104, may not correspond to the true position of the reflective surface. This may also induce an error or misalignment of the sighting axis. Further, as the prism has a higher density than air, light travels more slowly in the prism than in the air. When the light beam reaches the prism 104, propagates therein and is reflected at inner surfaces of the prism before finally exiting the prism 104 for propagation in the air back towards the EDM, the light beam has travelled in the prism a shorter distance than a light beam would have travelled in air in the same amount of time. Thus, for each angle of incidence of the emitted light beam 610, there exists a virtual point M in the target 100 which corresponds to the distance measured by the EDM. The position of the point M (in the local frame of reference of the target) is dependent on the angle of incidence of the emitted light beam, thus on the orientation of the target 100 relative to the surveying instrument 120. The position of point M is obtained at the surveying instrument by interpreting the signals received from the target. It should be noted that the location of the point M is not dependent on the distance between the surveying instrument 120 and the target 100. The point M may be referred to as a tracked point M in the target 100.

Thus, an error function representative of a misalignment of the sighting axis with respect to the reference point O in the target 100 as a function of an orientation of the target 100 in relation to the surveying instrument 120 may comprise a positional error of the tracked point M in the target with respect to the reference point O. In other words, the error function may comprise a position of the tracked point M with respect to the reference point O as a function of the angle of incidence of the emitted light beam and/or the sighting axis of the surveying instrument 120.

Thus, knowing the orientation of the target relative to the surveying instrument, and the position of the tracked point M as a function of this orientation, the surveying instrument 120 may determine a position of the reference point O. In other words, compensating for the retrieved error may comprise determining the position of the reference point O based on the retrieved error.

In turn, the position of the point of interest 112 may be determined based on the position of the reference point O and some fixed, known, internal distance(s) in the target and, for example, the length of the pole 110 on which the target 100 is mounted.

It should be noted that compensating for the retrieved error need not include further adjusting or correcting the sighting axis of the surveying instrument. Instead, as described above, the compensation may be done purely in the calculation/determination of the position of the reference point O and/or the determination of the horizontal and vertical angles of the instrument used for determining the position of the target.

It will be appreciated that, unless explicitly stated otherwise, the examples shown in different figures may be combined, and elements having like reference numerals in different figures may be the same or similar to each other. In any event, it is intended that the foregoing description not to be limiting upon the scope of the invention, and that the invention be defined only by the scope of the following claims.

## Claims

1. A method of operating a surveying instrument for tracking of a target,
wherein said target includes a plurality of light emitting elements and/or a plurality of light reflecting elements distributed around a longitudinal axis of a base element of said target and configured to emit and/or reflect light radially,
wherein said surveying instrument includes a tracking unit comprising a light sensitive detector configured to detect light emitted and/or reflected by said plurality of light emitting elements and/or plurality of light reflecting elements, wherein the tracking unit is configured to adjust a sighting axis of said surveying instrument towards said target by maintaining a predetermined distribution of signal levels on the light sensitive detector,
said method comprising:
obtaining an error function representative of a misalignment of said sighting axis with respect to a reference point in the target as a function of an orientation of the target relative to said surveying instrument;
receiving information indicative of an orientation of said target relative to said surveying instrument while tracking said target;
retrieving an error from said error function based on the received information indicative of the orientation of the target relative to said surveying instrument; and
compensating for the retrieved error.

2. The method according to claim 1, wherein said retrieved error comprises a positional error of a tracked point in the target with respect to said reference point.

3. The method according to claim 1 or 2, wherein said retrieved error comprises an angular error of said surveying instrument, which angular error comprises a horizontal angular error and/or a vertical angular error.

4. The method according to any one of the preceding claims, wherein said compensating for the retrieved error comprises determining a position of said reference point based on the retrieved error.

5. The method according to any one of the preceding claims, wherein the error function for the target is obtained based on a reference error function obtained for a reference target by a procedure including:
activating the tracking unit of said surveying instrument for tracking said reference target being placed at a fixed position relative to the surveying instrument;
causing the orientation of the reference target to change relative to a direction between said surveying instrument and said target while maintaining the reference target at said fixed position; and
monitoring a change in orientation of the sighting axis of said surveying instrument while monitoring said change of orientation of the reference target, said change in the orientation of the sighting axis corresponding to the error.

6. The method according to any one of the preceding claims, wherein the error function for said target depends on a number of the plurality of light emitting elements and/or light reflecting elements distributed around the longitudinal axis of the base element and/or a geometrical arrangement of the plurality of light emitting elements and/or light reflecting elements at the base element.

7. The method according to any one of the preceding claims, further including monitoring a tilt angle of said target while tracking of the target, wherein the error function, or the compensation for the retrieved error, depends on the tilt angle of said target.

8. The method according to any one of the preceding claims, further including monitoring a distance from said surveying instrument to said target while tracking of the target, wherein the error function, or the compensation for the retrieved error, depends on said distance.

9. The method according to any one of the preceding claims, wherein the tracking unit of said surveying instrument is configured to track the target in an active mode using light emitted from the plurality of light emitting elements or in a passive mode using light emitted from the surveying instrument and reflected against the plurality of light reflecting elements of said target, wherein the error function depends on whether the tracking unit is configured to operate in the active mode or the passive mode.

10. The method according to any one of the preceding claims, wherein the obtention of the error function for said target further includes measurements of signal intensities for each one of the plurality of light emitting elements, wherein the error function is adjusted depending on said measurements.

11. The method according to any one of the preceding claims, wherein the tracking unit is configured to maintain a predetermined distribution of signal levels on the light sensitive detector by maintaining the sum of the signal levels on either side of a middle line of said light sensitive detector equal.

12. The method according to any one of the preceding claims, wherein the light sensitive detector of the surveying instrument is a camera or a quadrant photodetector.

13. The method according to any one of the preceding claims, wherein the orientation of said target relative to said surveying instrument is determined at the surveying instrument based on an orientation of the surveying instrument in a common reference frame and the received information indicative of an orientation of said target, wherein the received information includes an orientation of the target in the common reference frame.

14. A surveying instrument configured to track a target, wherein said target includes a plurality of light emitting elements and/or a plurality of light reflecting elements distributed around a longitudinal axis of a base element of said target and configured to emit and/or reflect light radially, said surveying instrument including:
a tracking unit including a light sensitive detector configured to detect light emitted and/or reflected by said plurality of light emitting element and/or said plurality of light reflecting elements, wherein said tracking unit is configured to adjust a sighting axis of said surveying instrument towards said target by maintaining a predetermined distribution of signal levels on the light sensitive detector, and
a processing unit configured to:
obtain an error function representative of a misalignment of said sighting axis with respect to a reference point in the target as a function of an orientation of the target relative to said surveying instrument;
receive information indicative of an orientation of said target relative to said surveying instrument while tracking said target;
retrieve an error from said error function based on the received information indicative of the orientation of the target; and
compensate for the retrieved error.

15. The surveying instrument of claim 14, wherein the processing unit is configured to operate in accordance with a method as defined in any one of claims 1 to 13.
